# EUROPEAN PATENT SPECIFICATION

(11) **EP 2 397 577 B1**
(45) Date of publication and mention of the grant of the patent: **11.09.2013**
(21) Application number: 11170484.7
(22) Date of filing: 20.06.2011
(51) Int. Cl.: C23C 18/16, C23C 18/32, C23C 18/54, C25D 7/00, D02G 3/44, D06M 11/83, C23C 18/30, C25D 3/22

(54) **Metallization of textile structures**
Metallisierung von Textilstrukturen
Métallisation de structures textiles

(30) Priority: 18.06.2010 IT MI20101117
(43) Date of publication of application: 21.12.2011
(73) Proprietor: Soliani EMC S.r.l., 22100 Como (IT)
(72) Inventor: Re, Giovanni Carlo, Giussano (MB) (IT)
(74) Representative: Postiglione, Ferruccio

(56) References cited:
- US-A- 4 341 823
- DATABASE WPI Week 201049 Thomson Scientific, London, GB; AN 2010-C72357 XP002616715, -& KR 2010 023 646 A (KIM D) 4 March 2010 (2010-03-04)
- DATABASE WPI Week 200950 Thomson Scientific, London, GB; AN 2009-K15146 XP002616716, -& KR 2009 052 996 A (MAIN ELECOM CO LTD) 27 May 2009 (2009-05-27)
- DATABASE WPI Week 201025 Thomson Scientific, London, GB; AN 2010-D07404 XP002616717, -& KR 2010 023 986 A (KIM D) 5 March 2010 (2010-03-05)
- MADRONERO, A., SANZ, J., PRENSA, M.: "Preplating process of a carbon fiber prior to its compactation onto a zinc electrodeposited matrix | [Proceso de metalizacion de una fibra de carbono para su incorporacion a matrices de zinc]", REVISTA DE METALURGIA (MADRID), vol. 24, no. 4, 1988, XP008131571,

## Description

### Field of the Invention

The present invention refers to metallised textile structures used both for making electromagnetic shields and applications wherein it is required a surface electrical conductivity. As examples of application, for shielding purposes, the shielded rooms or curtains and the use in composite materials are mentioned.

Other uses with reference to the conductivity in the industrial or medical fields are: sensors, seals, tapes, etcetera.

### State of the art

Over the years, different types of textile metallized structures have been developed and as examples which find a more prevalent and recent use, metallized fabrics made only of copper, or made inside of copper/outside of nickel with the weight percentages of about 80/20 respectively can be mentioned.

Further fabrics for particular applications employ noble metals (for example silver).

However, these textile structures show serious drawbacks and disadvantages, particularly, with reference to improved electromagnetic shielding properties paired with a good electrical conductivity and chemical stability to the environmental agents.

Copper does not have a good resistance to corrosion due to its affinity for air oxygen. In dry air, copper is covered by sulphide and in humid air copper is coated by a layer of basic carbonate (verderame). Despite copper is electropositive in the potential scale (Strandar electrode potential), it is not considered a noble metal.

For this reason, the copper metallized fabric, as is or coupled with outer nickel, shows an abrupt decrease of the surface conductivity values.

The same happens also when copper is present as an inner layer, because the wear of the outer layer causes the copper to come to the outer surface with the consequent problems of decay and corrosion.

The use of nickel as a material for metallizing textile structures causes further and serious drawbacks.

Nickel is a stable metal which does not change its state in air, however, it has a suspected carcinogenic nature (safety phrase R40).

Further, nickel causes a sensitization that is allergies and dermatitis, when it contacts the skin (safety phrase R43).

Moreover, the European Community standards are more and more restrictive to the nickel use, even though is present in small quantities in alloys, as it is used in fashion jewelry (earrings, necklaces, bracelets) or in straps and cases of watches or also in the metallized shells of the cell phones.

The use of noble metals can form oxidations and corrosions where they contact less electropositive metals in the standard redox potential scale.

KR 2010 023 646 A discloses a process for coating a polyester fiber and manufacturing an electromagnetic shielding device, comprising, successively, activation, acceleration electroless nickel plating, electroless copper plating and tin electroplating and performing nickel or tin plating with the tin plating or substitution tinning plating(S300); and performing a discoloration preventing process (S400).

MADRONERO A; SANZ J; PRENSA M: "Preplating process of a carbon fiber prior to its compactation onto a zinc electrodeposited matrix (Proceso de metalizacion de una fibra de carbono para su incorporacion a matrices de zinc]" REVISTA DE METALURGIA (MADRID)vol. 24, no. 4, 1988 pages 261-270 disclose a manufacturing process of carbon fibre reinforced zinc by electrodeposition of metallic zinc onto carbon yarn wherein, in view of the electric conductive nature of the carbon fiber, a premetallized coating of the fiber is performed by electroless copper or nickel plating.

Therefore, it was strongly felt the need to overcome the objective limits of the above mentioned metallized textile structures with improved electromagnetic shielding properties, paired with a good electrical conductivity, chemical stability to the environment agents and compatibility with the human body.

### Summary of the invention

The Applicant, by continuing the research in the present technical field, has surprisingly and unexpectedly obtained: a metallized textile structure comprising a non conductive organic or inorganic synthetic fiber, said fiber being coated: (a) by a first metal layer made of nickel, (b) by a second metal layer placed over the first layer, the metal being selected between copper and silver, and (c) by a third metal layer made of zinc, placed over the second layer.

A further object of the present invention is a non conductive organic or inorganic synthetic fiber, said fiber being coated: (a) by a first metal layer made of nickel, (b) by a second metal layer placed over the first layer, the metal being seelected between copper and silver, and (c) by a third metal layer made of zinc, placed over the second layer.

A further object of the present invention is a process of metallizing a textile structure comprising a non conductive organic or inorganic synthetic fiber, wherein, after the step (i) of chemically depositing a nickel layer on the synthetic fiber of the textile structure, step (i) being preceded by the steps of activating and accelerating the fiber itself, there are: the step (ii) , of depositing a second metal layer made of Copper or silver on the fiber obtained by step (i), by dipping the textile structure, and then the step (iii) of electrolytically depositing a third metal layer made of zinc on the fiber obtained by the step (ii) of the textile structure.

It is a further object of the present invention the use of a metallized textile structure according to the present invention as: electromagnetic radiation shielding room, curtain or sheet or as sensor, seal, tape in the industrial or medical field.

### Detailed description of the invention

Therefore, it is an object of the present invention :
a metallized textile structure comprising a non conductive organic or inorganic synthetic fiber, said fiber being coated: (a) by a first metal layer made of nickel, (b) by a second metal layer placed over on the first layer, the metal being selected between copper and silver, and (c) by a third metal layer of zinc, placed over on the second layer.

Specifically, as a further preferred embodiment of the present invention, the term "non conductive organic or inorganic synthetic fiber" means a fiber selected among the group comprising: polyester, polyamide, aromatic polyamides, para-aramides (Kevlar®), meta-aramides (Nomex®), glass fibers or pure silica, in other words all non conductive fibers.

Specifically, as a further preferred embodiment of the present invention, the term "metal layer made of nickel" means chemically deposited nickel, the term "metal layer made of copper or silver" means dipping-deposited or chemically deposited copper or silver, and the term "metal layer made of zinc" means electrolytically deposited zinc.

Therefore, it is a further embodiment of the present invention a metallized textile structure comprising a non conductive organic or inorganic synthetic fiber selected among the group comprising: polyester, polyamide, aromatic polyamides, para-aramides (Kevlar®), meta-aramides Nomex®), glass fibers or pure silica, said fiber being coated: (a) by a first metal layer made of nickel, (b) by a second metal layer placed over on the first layer, the metal being selected between copper and silver, and (c) by a third metal layer made of zinc, placed over on the second layer.

Further objects of the present invention, as its preferred embodiments, are:
- a metallized textile structure comprising a non conductive organic or inorganic synthetic fiber selected among the group comprising: polyester, polyamide, aromatic polyamides, para-aramides (Kevlar®), meta-aramides (NomexⓇ), glass fibers or pure silica, characterized by the fact that:
   said fiber is coated by a first nickel layer on which is placed over a second copper layer and on which is placed over a third zinc layer;
      or
   said fiber is coated by a first nickel layer on which is placed over a second silver layer and on which is placed over a third zinc layer.

A further object of the present invention is a non conductive organic or inorganic synthetic fiber, said fiber being coated: (a) by a first metal layer made of nickel, (b) by a second metal layer placed over on the first layer, the metal being selected between copper and silver, and (c) by a third metal layer made of zinc, placed over on the second layer.

A further object of the present invention is non conductive organic or inorganic synthetic fiber selected among the group comprising: polyester, polyamide, para-aramides (KevlarⓇ), meta-aramides (Nomex®), glass fibers or pure silica, said fiber being coated: (a) by a first metal layer made of nickel, (b) by a second metal layer placed over on the first layer, the metal being selected between copper and silver, and (c) by a third metal layer made of zinc, placed over on the second layer.

Further objects of the present invention, as its preferred embodiments,is:
- a non conductive organic or inorganicsynthetic fiber selected among the group comprising: polyester, polyamide, aromatic polyamides, para-aramides (KevlarⓇ), meta-aramides (NomexⓇ), glass fibers, or pure silica, characterized by the fact that:
   said fiber is coated by a first nickel layer on which is placed over a second copper layer and on which is placed over a third zinc layer;
   said fiber is coated by a first nickel layer on which is placed over a second silver layer and on which is placed over a third zinc layer.

According to the present invention, the term "textile structure" means weft/warp fabrics, runproof fabrics, knitted fabrics or knitted material, non woven fabrics (TNT), triaxial fabrics.

A further object of the present invention is a process of metallizing a non conductive textile structure comprising an organic or inorganic synthetic fiber,wherein after the step (i) of chemically depositing a nickel layer on the synthetic fiber of the textile structure, step (i) being preceded by the steps of activating and accelerating the fiber itself, there are: the step (ii) of depositing a second metal layer made of copper or silver on the fiber obtained by the step (i) by dipping the textile structure, and then the step (iii) of electrolytically depositing a third metal layer made of zinc on the fiber obtained by the step (ii) of the textile structure.

Specifically, the steps of activating and accelerating the synthetic fiber, before the step (i) of chemically depositing the first metal layer, are performed according to well known procedures and conditions as a function of the different kind of the synthetic fiber and as the function of the type of the textile structure in which is configured the fiber. Also for this reason, the activation and acceleration pre-treatments are preceded as a function of the kind of the synthetic fibers and of the arrangement of the textile structure, by degreasing and neutralization steps, or by baths with a sweller and conditioner; preactivation baths, etcetera.

In a further preferred embodiment, object of the present invention, between the chemical depositing step (i) and the dipping depositing step (ii) there is a step of rinsing the textile structure by the following sequence of rinses: a static rinse, a spray rinse optionally followed by a conditioning of the textile structure in an acid bath for some minutes at room temperature.

Further, it is preferred, according to the present invention, a process of metallizing a textile structure comprising a non conductive organic or inorganic synthetic fiber, according to any of the herein described embodiments, wherein in-between each step of treating a synthetic fiber textile structure, and particularly in-between the steps-. (i) of chemical deposition, (ii) of dipping deposition, and (iii) of electrolytic deposition, at the end of each step, the obtained textile structure is rinsed with water.

According to the present invention, the term "dipping" means a metallization (electroless) bath wherein the metal in solution [in this case, the metals are copper (Cu) or silver (Ag)] since is more electropositive in the redox potentrial scale (Standard redox potentials) it shifts a less noble, metal, in this case nickel (Ni),forming the first metallization of the process. In such exchange, the less noble metal goes into solution and forms the pollutant determining the life of the bath itself.

Generally,the dipping, according to the present invention, is employed for depositing thin layers of metal, thicknesses of at least 0.1-0.2 µm, preferably made of copper or silver.

Generally, the concentrations of metal salt deposited by dipping are not high, generally from 1 to 5 g/l of metal ion, preferably of 1 g/l of metal ion for copper or silver.

Accordingly, we are carrying out a step also known as dip plating or metal replacement comprising the following: Applying an adherent layer of more-noble metal to the surface of a metal object by dipping in a solution of more-noble metal ions; a replacement reaction (McGraw-Hill Dictionary of Scientific & Technical Terms, 6E, Copyright Ⓒ 2003 by The McGraw-Hill Companies, Inc.).

The grammage of the raw textile structure, that is before being subjected to metallization varies for example from 40 to 200 g/m².

Further, according to the present invention textile structures, such as non woven fabrics comprising polyester or nylon fibers, that is non conductive fabrics, are preferred.

By the present invention, it is possible to obtain metallized textile structures having the typical advantages of nickel: high chemical stability and at the same time high electromagnetic shielding without its drawbacks. In fact, the further metal layers: the copper or silver intermediate layer and the outermost zinc layer, improve both the electromagnetic shielding and the chemical stability properties, typical of nickel, however in comparison to nickel, they confer to the metallized textile structure containing them better properties of electrical conductivity and compatibility with the human body.

For the same overall thickness of the deposit on the fiber, the copper and zinc improve the surface conductivity with respect to the nickel, by easily lowering it under 100 mohm cm².

Moreover, from the point of view of the process, it is to be noted that the dipping step (ii) causes the following electrolytic depositing step (iii) to uniformly advance, that is a starting homogeneous and stable metal film is formed, obtaining in this way a thickness increase of the buildup with metal adhesion without the undesired corrosions.

Unexpectedly, in the presence of a clipping", the electrolytic treatment is subjected to a true "triggering" by a slight reduction of the surface conductivity.

The nickel chemical deposit on the organic or inorganic synthetic fibers-based textile structure is a stable and reliable treatment, established and known, generally performed at temperatures slightly greater than the room temperature, preferably at 30-40 °C, in slightly alkaline pH baths, preferably a pH of 8,5 - 9,5, with nickel halide baths preferably chloride.

With reference to the dipping copper deposit, it is performed at room temperature by dipping the textile structure and the associated synthetic fibers for few minutes in a copper salt bath, preferably a sulfate bath having a strongly acid pH (mineral acids).

With reference to the dipping silver deposit, it is performed at a temperature of about 50°C by dipping the textile structure and the associated synthetic fibers for a few minutes in a silver salt bath, preferably a oxide having a pH of about 9 in the presence of potassium hydroxide.

With reference to the zinc electrolytic deposit, the baths in which it is performed the treatment are zinc halide salts, preferably chloride, having a slightly acid pH and an organic-based refiner, optionally with small quantities of "Spendogeno" or "shining agents" (generally benzoic, acetic, and carbonic type organic acids, in the presence of alkyl ether hydroxide ethyl ether chlorobenzaldehyde and phenybutenone groups).

However, the effect of the shining agent on the deposit is very variable depending on the used currents.

The textile structure advances on electrified metal rolls acting as cathode contact. The anodes are formed by baskets filled with metal zinc. The deposit occurs on all the surfaces of the textile structure.

The electrical continuity and cooling are granted by continuously spraying the fabric on the electrified rolls by the bath itself obtained by a deriving a portion from the recirculated flow.

Under the operating conditions, the voltage set by the rectifier is smaller than or equal to 7 Volts, preferably 4-7 Volts with a cathode density current for a medium grammage textile structure for example 100 g/m², smaller than or equal to 1 A/dm², preferably 0.7-1 A/dm².

Moreover, as a further preferred embodiment of the invention, the zinc electrolytic depositing step is performed, with the same conditions, in three sequentially located tanks.

The metallized textile structures comprising the non conductive organic or inorganic synthetic fibers, according to the present invention, said non conductive organic or inorganic synthetic fibers, according to the present invention, and the associated metallizing processes enable to form a first chemically deposited metal layer having a thickness of at least 0.2 - 0.3 µm, preferably at least 0.3 µm, still more preferably a first nickel layer of at least 0.3 µm, a second dipping or chemically deposited metal layer having a thickness of at least 0.1 - 0.15 µm, preferably of at least 0.15 µm, still more preferably a second copper or silver layer of at least 0.15 µm, a third electrolytically deposited metal layer having a thickness of at least 0.5 - 0.55 µm, preferably of at least 0.55 µm, still more preferably a third zinc layer of at least 0.55 µm; most preferably a metallized textile structure comprising non conductive organic or inorganic synthetic fibers selected among polyester, polyamide, aromatic polyamides, para-aramides (Kevlar®), meta-aramides (Nomex®), glass fibers or pure silica according to the present invention, as well as said non conductive metallized organic or inorganic synthetic fibers according to the present invention and the associated metallization processes comprising the step of depositing a first nickel layer of at least 0.15 µm thickness, a second copper or silver layer of at least 0.30 µm thickness, and a third zinc layer of at least 0.55 µm thickness.

The metallized textile structures comprising the non conductive organic or inorganic synthetic fiber, according to anyone of the herein described embodiments, all objects of the present invention, have concomitant and improved electromagnetic shielding properties, a good electrical conductivity, good chemical stability to the environment agents and compatibility to the human body.

It is a further object of the present invention the use of a metallized textile structure according to the present invention as: electromagnetic radiation shielding room, curtain, or sheet, or as sensor, seal, tape in the industrial or medical field, as well as further objects of the present invention are rooms, curtains, sheets, sensors, seals, tapes.

The following non-limiting examples describe embodiments of the invention.

### EXAMPLE OF EMBODIMENT 1

A textile structure of a polyester fabric (having an average grammage of 100 g/m²) was subjected to the following treatment steps, one after the other:

### Degreasing

In order to eliminate possible contaminations due to weaving treatments, the fabrics is dipped in a sodium hydroxide-based alkaline bath for 10 mins at 70°C.

### Neutralization

The treatment residues of the preceding step are eliminated before the next activation step which is done in an acid environment. This step is done in an acid bath (30% hydrochloric acid in 60 ml/l) , with a bath temperature of 25°C and a dipping time of 2-5 mins.

### Activation

In order to activate the synthetic fiber surface for the next chemical deposition, the fabric is dipped for 5-10 mins in a bath containing palladium chloride (50-100 mg/l) and tin chloride (4 g/l) at a temperature of 25°C.

### Acceleration

In order to clean the fabric surface after the preceding treatment from the colloidal residues, the fabrics is dipped for 2-4 mins in a bath of a fluorinated acid solution (20 ml/l) at 25°C.

### Chemical nickel plating (chemical deposition of nickel)

The fabric, after the acceleration treatment, is dipped for 5-10 mins in a bath of pH 3.5 - 9.5 at 30-40°C in the presence of nickel chloride (4-7 g/l) and sodium hypophosphite (18 g/l).

### Copper deposition for dipping

The copper deposition by dipping is performed at room temperature (maximum temperature: 35°C) by dipping the fabric, beforehand subjected to chemical nickel plating, for a few minutes (maximum time: 5 mins), in a copper salts bath, preferably sulphate with a strongly acid pH (mineral acids),

### Zinc electrolytic deposition

The fabric, after the copper bath treatment, is subjected to a zinc electrolytic deposition by dipping it in a bath, at 50°C, comprising zinc chloride (65 g/l) and potassium chloride (200 g/l) with a pH: 5.0 - 5.5 in the presence of shining agent traces according to the above-mentioned general operating conditions.

Consequently, it is obtained a metallized polyester fabric having three consecutive metal layers: the first made of nickel, the second of copper and the third of zinc.

### EXAMPLE OF EMBODIMENT 2

### Galvanizing of polyester by dipping in copper

Three types of polyester fabric (having a grammage of 40, 60, 130 g/m² respectively), and a type of a non woven fabric having a grammage of 200 g/m² are subjected to the following treatment steps, one after the other:

### Degreasing

In order to prepare the synthetic fiber surface to be homogenously activated and eliminating possible contaminations due to weaving treatments, the fabric is dipped in a sodium hydroxide-based alkaline bath for 10 minutes at 70°C.

### Neutralization

The treatment residues of the preceding step are eliminated before the next activation step, which occurs in an acid environment. It is performed in an acid bath (60 ml/l of hydrochloric acid) at a bath temperature of 25°C and dipping time of 2-5 mins.

### Activation

In order to activate the synthetic fiber for the following chemical deposition, the fabric is dipped for 5-10 mins, in a bath containing palladium chloride (50-100 mg/l) and tin chloride (4 g/l) at a temperature of 35°C.

### Acceleration

In order to remove the colloidal residues after the preceding treatment from the fabric surface, the fabric is dipped for 2-4 mins in a bath containing fluorinated acid solution (20 ml/l) at 25°C.

### Chemical nickel plating (nickel chemicaldeposition)

The fabric, after the acceleration treatment, is dipped for 5-10 mins in baths of pH 6.5 - 0.5 at 30-40°C in the presence of nickel chloride (4-7 g/l) and sodium hypophosphate (18 g/l).

### Copper deposition by dipping

The dipping copper deposition is performed at room temperature (maximum temperature: 35°C) by dipping the fabric, beforehand subjected to chemical nickel plating, for a few minutes (maximum time: 5 minutes), in a copper salt bath, preferably sulphate with a strongly acid pH (mineral acids).

### Zinc electrolytic deposition

The fabric, after the copper bath treatment, is subjected to a zinc electrolytic deposition by dipping it in a bath at 50°C comprising zinc chloride (65 g/l) and potassium chloride (200 g/l) with ph: 5.0 - 5.5 in the presence of 40 ml/l of an organic-based refiner and traces of shining agents according to the above-mentioned general operating conditions.

Consequently, it is obtained a metallized polyester fabric having three successive metal layers: the first made of nickel, the second of copper, and the third of zinc.

The current amount used during the electrolytic step is in direct proportion to the fabric grammage. In this case, the current is between 180 and 60 A as a whole.

### EXAMPLE OF EMBODIMENT 3

### Galvanizing of polyester by silver dipping

Three kinds of polyester fabric (having a grammage comprised between 40 and 130 g/m²) and a kind of non woven fabric having a grammage of 200 g/m² were subjected to the same treatment steps of the preceding case, but using a silver dipping.

### Deposition of silver by dipping

In this case, it is used a bath containing potassium oxide, potassium hydroxide in the presence of ethylenediamine, oxalic acid, and lactic acid.

The operating conditions are the following:
Temperature: 40-50°C
pH: 8.5-9.5
metal silver concentration: 1 g/l
dipping time: maximum 5 mins

### Zinc electrolytic deposition

The galvanizing baths are the same of the preceding case.

Operatively, it is to be observed a decrease of the voltage for the same supplied current with respect to the preceding case because silver has a conductivity greater than the one of copper.

It follows a metallized polyester fabric having three successive metal layers: the first made of nickel, the second of silver, and the third of zinc.

### EXAMPLE OF EMBODIMENT 4

### Galvanizing of meta-aramides (Nomex®) and para-aramides (Kevlar®)

The starting fabric is Nomex®, meta-aramide, having a grammage of 100 g/m².

The metallization cycle of these fabrics is different from the preceding fabrics for the first treatment.

In this case, the bath is formed by a pre-acti.vator (containing propan-2-ol alcohol) with a concentration of 5-10% in the presence of 60 ml of hydrochloric acid for a dipping time of 30 mins.

After a water rinse, it is performed a rinse with diluted hydrochloric acid (60 ml/l).

The successive steps are the same of the cases described in examples 1 and 2: activation/acceleration/chemicall nickel/copper dipping/zinc electrolytic deposition.

The just described process was also applied to the fabric of para-aramide, Kevlar®, with results similar to the ones of the metallization of the meta-aramide fabric.

### EXAMPLE OF EMBODIMENT 5

### Nylon galvanizing

The fabric used is a non woven fabric having a grammage of 60 g/m² made of nylon.

The metallization cycle is formed by the following steps:

### Swelling

It is performed at 40°C in acid environment with 200 ml/l of HCI for 6 mins in the presence of Guanidinium chloride, 2-(2-ethoxytoxy) ethanol. Polyethylene glycol monoisodecyl ether, ethylene glycol homopolymer, 1-H-imidazolium, 1-athyenyl-(1 or 3) methyl-methyl sulfate.

### Conditioning

It is performed at 40°C in an acid environment with 200 ml/l of HCl for 6 mins in the presence of 2-(2-ethoxytoxy)ethyl acetate.

### Activation

It is performed at 40°C with "ionic" palladium with 30 ml/l of HCl for 3 mins.

### Palladium reduction

The treatment is performed at 40°C for 3 minutes with reducing salts.

### Chemical nickel plating (nickel chemical deposition)

This step is performed by treatment the nylon fabric from the above-described steps, with slightly acid chemical nickel (non ammoniacal) with the following conditions:
- 16-20 g/l of hypophosphite,
- 4 g/l of metal nickel,
- 50°C
- pH 6.5.

The following steps are the same of the preceding cases of the examples 1 and 2 of the copper deposition by dipping/electrolytic deposition of zinc.

### EXAMPLE OF EMBODIMENT 6

### Galvanizing of fabrics made of glass fiber and silica

The same treatment cycle described in the example 5 is performed for the nylon fabric, this cycle is performed on glass fiber fabrics, with the addition of ammonium bi-fluoride (about 25 g/L) in the second bath, the one of the "conditioning" step, for etching the surface of the fiber and improving the adhesion to the deposit.

## Claims

1. Non conductive organic or inorganic synthetic fiber, said fiber being coated: (a) by a first metal layer made of nickel, (b) by a second metal layer placed over on the first one, the metal being selected between copper and silver, and (c) by a third metal layer made of zinc, placed over on the second layer.

2. Non conductive organic or inorganic Synthetic fiber according to claim 1, selected among the group comprising: polyester, polyamide, aromatic polyamides, para-aramides, meta-aramides, glass fibers or pure silica.

3. Non conductive organic or inorganic synthetic fiber according to claim 1 wherein the first metal layer made of nickel is chemically deposited nickel, the second metal layer placed over on the first one, the metal being selected between copper and silver, is dipping-deposited or chemically deposited copper or silver and the third metal layer made of zinc, placed over on the second layer is electrolytically deposited zinc.

4. Metallized textile structure comprising a non conductive organic or inorganic synthetic fiber according to claim 1.

5. Process of metallizing a textile structure comprising a non conductive organic or inorganic synthetic fiber, wherein after the step (i) of chemically depositing a nickel layer on the synthetic fiber of the textile structure, step (i) being preceded by the steps of activating and accelerating the fiber itself, there are: the step (ii) of depositing a second metal layer made of copper or silver on the fiber obtained by step (i), by dipping the textile structure, and then the step (iii) of electrolytically depositing a third metal layer made of zinc on the fiber obtained by step (ii) of the textile structure.

6. Process of metallizing the textile structure comprising a non conductive organic or inorganic synthetic fiber, according to claim 5, **characterized by** the fact that the non conductive organic or inorganic synthetic fiber is selected among the group comprising: polyester, polyamide, aromatic polyamides, para-aramides, meta-aramides, glass fibers or pure silica.

7. Process of metallizing a non conductive organic or inorganic synthetic fiber, wherein after the step (i) of chemically depositing a nickel layer on the synthetic fiber, step (i) being preceded by the steps of activating and accelerating the fiber itself, there are: the step (ii) of depositing a second metal layer made of copper or silver on the fiber obtained by step (i) by dipping the fiber and then step (iii) of electrolytically depositing a third metal layer made of zinc on the fiber obtained by step (ii).

8. Process of metallizing a non conductive organic or inorganic synthetic fiber, according to claim 7, **characterized by** the fact that the non conductive organic or inorganic synthetic fiber is selected among the group comprising polyester, polyamide, aromatic polyamides, para-aramides, meta-aramides, glass fibers or pure silica.

9. Use of a metallized textile structure according to claim 4 as: electromagnetic radiation shielding room, curtain, or sheet, or as sensor, seal, tape or embedded in composite materials in the industrial or medical field.

10. Rooms, curtains, sheets, sensors, seals, tapes, composite materials comprising:
a metallized textile structure according to claim 4,
or comprising a non conductive organic or inorganic synthetic fiber according to claim 1.

## Patentansprüche

1. Nichtleitende organische oder anorganische synthetische Faser, wobei die Faser beschichtet ist: (a) mit einer ersten metallischen Schicht, gefertigt aus Nickel, (b) mit einer zweiten metallischen Schicht, welche über der ersten angeordnet ist, wobei das Metall ausgewählt ist zwischen Kupfer und Silber und (c) mit einer dritten metallischen Schicht, gefertigt aus Zink, welche über der zweiten Schicht angeordnet ist.

2. Nichtleitende organische oder anorganische synthetische Faser gemäß Anspruch 1, ausgewählt aus der Gruppe, umfassend: Polyester, Polyamid, aromatische Polyamide, Para-Aramide, Meta-Aramide, Glasfasern oder reines Silika.

3. Nichtleitende organische oder anorganische synthetische Faser gemäß Anspruch 1, wobei die erste metallische Schicht, die aus Nickel gefertigt ist, chemisch abgeschiedenes Nickel ist, das Metall der zweiten metallischen Schicht, die über der ersten angeordnet ist, ausgewählt ist zwischen Kupfer und Silber und tauchbeschichtet ist oder chemisch abgeschiedenes Kupfer oder Silber ist, und die dritte metallische Schicht aus Zink gefertigt ist, welche über der zweiten Schicht angeordnet ist und elektrisch abgeschiedenes Zink ist.

4. Metallisierte textile Struktur, umfassend eine nichtleitende organische oder anorganische synthetische Faser gemäß Anspruch 1.

5. Verfahren zur Metallisierung einer textilen Struktur, umfassend eine nichtleitende organische oder anorganische synthetische Faser, wobei nach dem Schritt (i), einer chemischen Abscheidung einer Nickelschicht auf die synthetische Faser der textilen Struktur, wobei dem Schritt (i) die Schritte der Aktivierung und Beschleunigung der Faser selbst vorausgehen, es den Schritt (ii), eine Abscheidung einer zweiten metallischen Schicht, gefertigt aus Kupfer oder Silber, auf die in Schritt (i) erhaltene Faser mittels Tauchen der textilen Struktur und dann den Schritt (iii) gibt, eine elektrolytische Abscheidung einer dritten metallischen Schicht, die aus Zink gefertigt ist, auf die Faser, die durch Schritt (ii) der textilen Struktur erhalten wird.

6. Verfahren zur Metallisierung der textilen Struktur, umfassend eine nichtleitende organische oder anorganische synthetische Faser gemäß Anspruch 5, **dadurch gekennzeichnet, dass** die nichtleitende organische oder anorganische synthetische Faser ausgewählt aus der Gruppe, umfassend Polyester, Polyamide, aromatische Polyamide, Para-Aramide, Meta-Aramide, Glasfasern oder reines Silika.

7. Verfahren zur Metallisierung einer nichtleitenden organischen oder anorganischen synthetischen Faser, wobei nach Schritt (i), der Abscheidung einer Nickelschicht auf die synthetische Faser und die dem Schritt (i) vorausgehenden Schritte der Aktivierung und Beschleunigung der Faser, es den Schritt (ii), eine Abscheidung einer zweiten metallischen Schicht aus Kupfer oder Silber auf die aus Schritt (i) erhaltene Faser durch Tauchen der Faser und dann den Schritt (iii) gibt, eine elektrolytische Abscheidung einer dritten metallischen Schicht, gefertigt aus Zink, auf die durch Schritt (ii) erhaltene Faser.

8. Verfahren zur Metallisierung einer nichtleitenden organischen oder anorganischen synthetischen Faser gemäß Anspruch 7, **dadurch gekennzeichnet, dass** die nichtleitende organische oder anorganische synthetische Faser ausgewählt ist aus der Gruppe, umfassend Polyester, Polyamide, aromatische Polyamide, Para-Aramide, Meta-Aramide, Glasfasern oder reines Silika.

9. Verwendung einer metallisierten textilen Struktur gemäß Anspruch 4 als elektromagnetische Strahlung abschirmenden Raum, Vorhang oder Platte, oder als Sensor, Dichtung, Band oder eingebettet in Kompositmaterialien im industriellen oder medizinischen Bereich.

10. Räume, Vorhänge, Platten, Sensoren, Dichtungen, Bänder, Kompositmaterialien umfassend:
eine metallisierte textile Struktur gemäß Anspruch 4,
oder umfassend eine nichtleitende organische oder anorganische synthetische Faser gemäß Anspruch 1.

## Revendications

1. Fibre synthétique organique ou inorganique non conductrice, ladite fibre étant revêtue : (a) d'une première couche métallique faite de nickel, (b) d'une deuxième couche métallique placée sur la première, le métal étant choisi parmi le cuivre et l'argent, et (c) d'une troisième couche métallique faite de zinc, placée sur la deuxième couche.

2. Fibre synthétique organique ou inorganique non conductrice selon la revendication 1, choisie dans le groupe comprenant : le polyester, le polyamide, les polyamides aromatiques, les para-aramides, les méta-aramides, les fibres de verre ou la silice pure.

3. Fibre synthétique organique ou inorganique non conductrice selon la revendication 1, dans laquelle la première couche métallique faite de nickel est du nickel déposé par voie chimique, la deuxième couche métallique placée sur la première, le métal étant choisi parmi le cuivre et l'argent, est du cuivre ou de l'argent déposé par immersion ou déposé par voie chimique et la troisième couche métallique faite de zinc, placée sur la deuxième couche, est du zinc déposé par voie électrolytique.

4. Structure textile métallisée comprenant une fibre synthétique organique ou inorganique non conductrice selon la revendication 1.

5. Procédé de métallisation d'une structure textile comprenant une fibre synthétique organique ou inorganique non conductrice, dans lequel après l'étape (i) de dépôt chimique d'une couche de nickel sur la fibre synthétique de la structure textile, l'étape (i) étant précédée des étapes d'activation et d'accélération de la fibre elle-même, il y a : l'étape (ii) de dépôt d'une deuxième couche métallique faite de cuivre ou d'argent sur la fibre obtenue par l'étape (i), par immersion de la structure textile, puis l'étape (iii) de dépôt électrolytique d'une troisième couche métallique faite de zinc sur la fibre obtenue par l'étape (ii) de la structure textile.

6. Procédé de métallisation de la structure textile comprenant une fibre synthétique organique ou inorganique non conductrice, selon la revendication 5, **caractérisé par le fait que** la fibre synthétique organique ou inorganique non conductrice est choisie dans le groupe comprenant : le polyester, le polyamide, les polyamides aromatiques, les para-aramides, les méta-aramides, les fibres de verre ou la silice pure.

7. Procédé de métallisation d'une fibre synthétique organique ou inorganique non conductrice, dans lequel après l'étape (i) de dépôt chimique d'une couche de nickel sur la fibre synthétique, l'étape (i) étant précédée des étapes d'activation et d'accélération de la fibre elle-même, il y a : l'étape (ii) de dépôt d'une deuxième couche métallique faite de cuivre ou d'argent sur la fibre obtenue par l'étape (i) par immersion de la fibre puis l'étape (iii) de dépôt électrolytique d'une troisième couche métallique faite de zinc sur la fibre obtenue par l'étape (ii).

8. Procédé de métallisation d'une fibre synthétique organique ou inorganique non conductrice, selon la revendication 7, **caractérisé par le fait que** la fibre synthétique organique ou inorganique non conductrice est choisie dans le groupe comprenant le polyester, le polyamide, les polyamides aromatiques, les para-aramides, les méta-aramides, les fibres de verre ou la silice pure.

9. Utilisation d'une structure textile métallisée selon la revendication 4 en tant que : chambre de protection contre les rayonnements électromagnétiques, rideau ou voile, ou en tant que capteur, joint d'étanchéité, ruban ou incorporé dans des matériaux composites dans le domaine industriel ou médical.

10. Chambres, rideaux, voiles, capteurs, joints d'étanchéité, rubans, matériaux composites comprenant :
une structure textile métallisée selon la revendication 4,
ou comprenant une fibre synthétique organique ou inorganique non conductrice selon la revendication 1.
